Europäisches Patentamt

European Patent Office

Office européen des brevets

(11) Publication number: **0 280 478**
**A2**

## (12) EUROPEAN PATENT APPLICATION

(21) Application number: **88301420.1**

(22) Date of filing: **19.02.88**

(51) Int. Cl.⁴: **B 60 L 7/12**

(30) Priority: **20.02.87 GB 8704014**

(43) Date of publication of application:
**31.08.88 Bulletin 88/35**

(84) Designated Contracting States: **DE FR IT**

(71) Applicant: **FKI CABLEFORM LIMITED**
**Gratrix Works Gratrix Lane**
**Sowerby Bridge, HX6 2PH (GB)**

(72) Inventor: **Morton, John**
**33 Dean Lane**
**Hazel Grove Stockport Cheshire (GB)**

**Fox, Alistair Morley**
**11 Hill Rise**
**Romilly Stockport Cheshire (GB)**

(74) Representative: **Stanley, David William et al**
**APPLEYARD LEES & CO. 15 Clare Road Halifax**
**West Yorkshire HX1 2HY (GB)**

(54) **Regenerative braking systems.**

(57) An electric drive system of a battery electric vehicle comprises a d.c. series motor 4 which is supplied by a battery 1, and is connected to a vehicle drive wheel 8 via a gear box 7. An electronic switch 6 controls the supply of current to the motor 4, and is itself controlled by a control unit 3, which receives a brake demand signal from a pedal 2, and a current measurement signal from a current measurement device 5. A switch 9 controls motor and braking modes. Normally, the switch 9 is closed, but when it is opened, regenerative braking takes place. The control unit 3 regulates the retardation rate of the vehicle, by altering the mark/space ratio of the electronic switch 6, in order to maintain a constant retardation rate of the vehicle.

EP 0 280 478 A2

## Description

REGENERATIVE BRAKING SYSTEMS

This invention relates to regenerative braking systems, and is concerned particularly although not exclusively with such systems as used in battery electric vehicles.

A battery electric vehicle will typically employ a d.c. motor which, in normal motoring mode, draws its current from the vehicle battery. To achieve braking, it is common to control the energisation of the d.c. motor so as to cause it to act temporarily as a generator rather than a motor. During such "regenerative braking", energy is fed back to the battery by the motor, which is caused to slow down.

Regenerative braking can be very powerful. Thus, it is usually necessary to control carefully the motor current during braking, to reduce the risk of excessively fierce braking. This is usually achieved in practice by limiting the motor current to a fairly low level to ensure that, whatever the conditions, braking is sufficiently gentle.

Although this can work quite well in many conditions, it does have significant drawbacks. For example, where the vehicle is carrying a particularly heavy load, then the maximum braking effect may be rather poor, as compared to the case where the vehicle is unloaded. Also, braking of a vehicle on a gradient may be unacceptably poor, as compared to braking on the level.

In preferred embodiments, the present invention aims to provide battery electric vehicles with regenerative braking systems, which may be improved in the foregoing respects.

More generally, according to a first aspect of the present invention, there is provided a regenerative braking system comprising:

a d.c. machine;

an energy source for the d.c. machine, which source is capable of both supplying and absorbing energy;

control means for controlling energisation of the d.c. machine in either a motoring or a regenerative braking mode; and

monitoring means for monitoring a retardation rate actually achieved by the d.c. machine during regenerative braking:

wherein the control means is operative, in regenerative braking mode, to respond to the output of the monitoring means and control energisation of the d.c. machine so as to maintain said retardation rate at a predetermined level or in accordance with a predetermined variation with time.

Preferably, the control means comprises:

an electronic switch for connecting the energy source to the d.c. machine; and

a controller for the electronic switch, which controller is operative so to control the switch as to energise the machine in either a motoring or a regenerative braking mode.

The said monitoring means may comprise a current measurement device connected to measure the current supplied to the d.c. machine and to supply to the controller a corresponding current measurement signal; and the controller is operative, in regenerative braking mode, to output to the electronic switch a series of control pulses, the mark/space ratio of which is so varied as to maintain the motor current at a predetermined level, or in accordance with a predetermined variation with time.

The invention is particularly applicable to a battery electric vehicle having such a regenerative braking system, wherein the d.c. machine is a traction motor of the vehicle and the energy source is a battery of the vehicle.

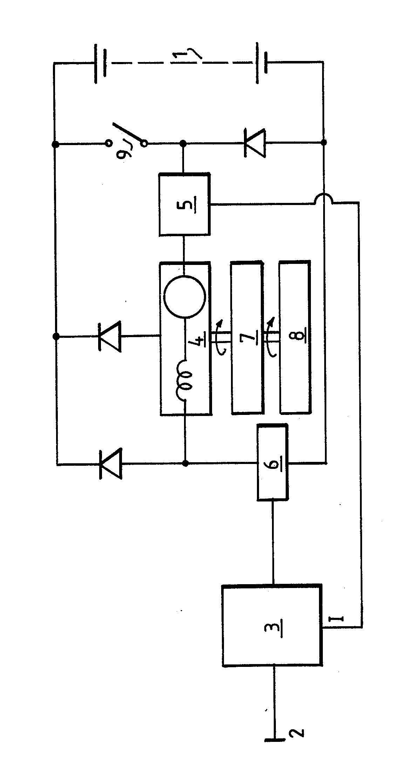

For a better understanding of the invention and to show how the same may be carried into effect, reference will now be made, by way of example, to the accompanying diagrammatic drawing, the single figure of which is a circuit diagram of an electric drive system of a battery electric vehicle.

The illustrated drive system comprises a d.c. series motor 4, which is arranged to be supplied by a battery 1. The motor 4 is connected to a vehicle drive wheel 8 via a gear box 7, or other suitable coupling device.

An electronic switch 6 controls the supply of current to the motor 4, and is itself controlled by a control unit 3, which receives a brake demand signal from a pedal 2, and a current measurement signal from a current measurement device 5. A switch 9 controls motor and braking modes.

Normally, the switch 9 is closed, and the d.c. motor 4 is supplied with electrical energy from the battery 1, to drive the vehicle drive wheel 8 via the gear box 7, in a more or less conventional manner. The control unit 3 controls the speed of the motor 4, via the electronic switch 6.

During regenerative braking, the switch 9 is opened and the control unit 3 regulates the retardation rate of the vehicle, by altering the mark/space ratio of the electronic switch 6. Initially, the control unit 3 controls the mark/space ratio of the electronic switch 6, to keep the motor current Im at a constant level. As the motor 4 slows down, the rate of change of mark/space ratio required to keep the current Im at the constant level indicates the retardation rate of the vehicle.

If the control unit 3 detects that the retardation rate of the vehicle is either too high or too low, then the mark/space ratio of the electronic switch 6 is modified accordingly, until the desired retardation rate is achieved.

The control unit 3 may control the mark/space ratio of the electronic switch 6 in a number of ways.

For example, it may modify the demand represented by the brake demand signal from the pedal 2, so as to keep the rate of retardation approximately constant, for a given value of the brake demand signal. Alternatively, it may cause the rate of retardation to follow a predetermined variation with time.

It will be appreciated by those skilled in the art that, below a certain speed, regenerative braking is not possible. This is when the voltage (Va) generated in the armature divided by the resistance (RM) of the motor circuit during regenerative braking, is less than the motor current (Im) required to generate the voltage Va. At this point, the braking mode is changed to "plug" braking - the switch 9 is closed again, to apply battery voltage to the field windings, under the control of controller 3 and electronic switch 6.

Thus, the illustrated system is operative to so control regenerative braking as to provide a predetermined retardation rate, largely irrespective of any changes in mass of the associated vehicle, any variations in gradient upon which the vehicle is operating, and any effects of wheel spin or skid.

It is found particularly convenient to monitor the rate of change of angular velocity of the motor 4, by monitoring the mark/space ratio of the motor current. However, it is possible to monitor the rate of change of angular velocity by alternative means.

Although the illustrated embodiment is described with particular advantage in relation to battery vehicles, regenerative braking systems in accordance with the invention may have other applications.

The contents of all papers and documents filed concurrently with this specification are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

**Claims**

1. A regenerative braking system comprising:

a d.c. machine;

an energy source for the d.c. machine, which source is capable of both supplying and absorbing energy;

control means for controlling energisation of the d.c. machine in either a motoring or a regenerative braking mode; and

monitoring means for monitoring a retardation rate actually achieved by the d.c. machine during regenerative braking;

wherein the control means is operative, in regenerative braking mode, to respond to the output of the monitoring means and control energisation of the d.c. machine so as to maintain said retardation rate at a predetermined level or in accordance with a predetermined variation with time.

2. A regenerative braking system according to Claim 1, wherein said control means comprises:

an electronic switch for connecting the energy source to the d.c. machine; and

a controller for the electronic switch, which controller is operative so to control the switch as to energise the machine in either a motoring or a regenerative braking mode.

3. A regenerative braking system according to Claim 2, wherein said monitoring means comprises a current measurement device connected to measure the current supplied to the d.c. machine and to supply to the controller a corresponding current measurement signal; and the controller is operative, in regenerative braking mode, to output to the electronic switch a series of control pulses, the mark/space ratio of which is so varied as to maintain the motor current at a predetermined level, or in accordance with a predetermined variation with time.

4. A regenerative braking system substantially as hereinbefore described with reference to the accompanying drawing.

5. A battery electric vehicle having a regenerative braking system according to any of Claims 1 to 4, wherein said d.c. machine is a traction motor of the vehicle and said energy source is a battery of the vehicle.

0280478